(19) Europäisches Patentamt
European Patent Office
Office européen des brevets

(11) **EP 2 830 281 B1**

(12) **FASCICULE DE BREVET EUROPEEN**

(45) Date de publication et mention de la délivrance du brevet:
**07.03.2018 Bulletin 2018/10**

(51) Int Cl.:
***H04L 29/06*** *(2006.01)*

(21) Numéro de dépôt: **14178205.2**

(22) Date de dépôt: **23.07.2014**

(54) **Procédé d'association de sources de données hétérogènes pour la sécurité des réseaux de communication et système associé**

Zuordnungsverfahren von heterogenen Datenquellen für die Sicherheit von Kommunikationsnetzen, und entsprechendes System

Method of associating heterogeneous data sources for the security of communication networks et related system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2013 FR 1301787**

(43) Date de publication de la demande:
**28.01.2015 Bulletin 2015/05**

(73) Titulaire: **Thales**
**92200 Neuilly Sur Seine (FR)**

(72) Inventeurs:
- **Huyot, Benoît**
  **92622 GENNEVILLIERS CEDEX (FR)**
- **Mabiala, Yves**
  **92622 GENNEVILLIERS CEDEX (FR)**
- **Sans, Stéphane**
  **92622 GENNEVILLIERS CEDEX (FR)**
- **Chollon, Laurent**
  **92622 GENNEVILLIERS CEDEX (FR)**

(74) Mandataire: **Lavoix**
**2, place d'Estienne d'Orves**
**75441 Paris Cedex 09 (FR)**

(56) Documents cités:
**US-B1- 7 356 585**

- **YIMEI JIN ET AL: "Approximate Packet Classification and Stateful Rule DFA for Cloud Intrusion Detection", COMPUTING, MEASUREMENT, CONTROL AND SENSOR NETWORK (CMCSN), 2012 INTERNATIONAL CONFERENCE ON, IEEE, 7 juillet 2012 (2012-07-07), pages 229-232, XP032208151, DOI: 10.1109/CMCSN.2012.57 ISBN: 978-1-4673-2033-7**
- **FRANCISCO MACIÁ-PÉREZ ET AL: "Network Intrusion Detection System Embedded on a Smart Sensor", IEEE TRANSACTIONS ON INDUSTRIAL ELECTRONICS, vol. 58, no. 3, 14 juin 2010 (2010-06-14), pages 722-732, XP055064180, ISSN: 0278-0046, DOI: 10.1109/TIE.2010.2052533**

**Description**

L'invention a pour domaine celui de la sécurité des réseaux de communication, et plus particulièrement des réseaux de communication IP, tels qu'un réseau local d'entreprise.

Dans ce domaine, on connait d'une part des composants logiciels de surveillance du réseau, tels que des systèmes de détection d'intrusion, aussi dénommés systèmes IDS (selon l'acronyme anglais « Intrusion Détection System »). Un tel composant est paramétré par l'éditeur qui y incorpore un certain nombre de règles d'alerte de base ainsi que par l'opérateur qui définit une bibliothèque de règles d'alerte spécifiques. Lorsque le composant détecte qu'un évènement capturé sur le réseau surveillé satisfait à l'ensemble des critères d'une règle d'alerte, il consigne l'événement suspect dans un tableau d'alertes, par exemple stocké dans une base de données.

Dans ce domaine, on connait d'autre part des sondes d'analyse du contenu de paquets interceptés sur le réseau, tels que des systèmes d'inspection en profondeur des paquets, aussi dénommés systèmes DPI (selon l'acronyme anglais « Deep Paquet Inspection »). Une telle sonde est propre à générer une pluralité de fichiers binaires, chaque fichier rassemblant les données des paquets appartenant à une même session de communication. Les données extraites sont non seulement relatives à la partie d'en-tête des paquets, mais également à la partie de charge utile des paquets.

Dans le présent document, par « paquet de données », on entend un datagramme élémentaire transmis sur le réseau de communication surveillé. Un paquet comporte une partie d'entête, contenant des données permettant l'acheminement du paquet d'un émetteur, vers un destinataire à travers le réseau, et une partie de charge utile, contenant les données d'application, aussi dénommées message, que l'émetteur souhaite partager avec le destinataire.

Dans le présent document, par « session », on entend l'ensemble des paquets de données échangés, selon le même protocole (FTP, HTTP, etc.), entre un même émetteur (défini par une adresse IP émetteur et un port émetteur) et un même destinataire (défini par une adresse IP destinataire et un port destinataire).

Ainsi, le tableau des alertes comporte des informations génériques sur un évènement identifié comme suspect. Cependant, un opérateur souhaiterait pouvoir disposer d'informations supplémentaires lui permettant d'analyser plus en détail un évènement suspect, en particulier de connaître comment il s'insère dans une session de communication, et quelles sont les données applicatives qu'il transmet.

Or, les composants de surveillance ne permettent pas une telle analyse en profondeur du contenu du paquet correspondant à un évènement suspect, ni la reconstruction de la session à laquelle appartient ce paquet.

Inversement, une sonde d'analyse du contenu des paquets intercepte l'ensemble du flux de données transitant au niveau de son point d'implantation dans le réseau. Elle est adaptée pour un traitement en temps réel des paquets selon des règles de collecte bien plus simples que celles des composants de surveillance. Les données extraites d'un paquet sont détaillées et remontent jusqu'aux couches applicatives. Elles sont stockées directement dans un fichier qui comporte par conséquent un grand nombre d'entrées. Or, un opérateur souhaiterait pouvoir disposer d'informations supplémentaires et plus génériques lui permettant d'identifier si un paquet intercepté constitue une attaque. Cependant, l'ajout de moyens de surveillance à une sonde conduirait à un ralentissement considérable des capacités de traitement de celle-ci.

Il y a donc un besoin pour pouvoir enrichir les alertes générées par un composant de surveillance, par des données collectées par une sonde d'analyse en profondeur des paquets.

Cependant, les formats des sources de données générées en sortie, d'une part, d'un composant de surveillance et, d'autre part, d'une sonde d'analyse des paquets sont hétérogènes.

Par ailleurs, du document US 7 356 585 81, on connait un procédé associant à chaque port du réseau, un capteur de surveillance propre à traiter les paquets circulant sur le port associé dans le but de générer, pour chaque paquet, des messages de données d'archivages brutes, d'alerte et/ou de flux de paquets. Les messages provenant de différents capteurs sont collectés par un serveur, qui comporte un moteur permettant de corréler les messages de même type entre eux. En particulier, le serveur est propre à associer deux messages de flux de paquets associés à des paquets différents, dans un message combiné. Pour ce faire, le serveur se fonde sur des critères adaptés, tels que des règles de corrélation, l'adresse IP de la source, le message d'alerte associé à chaque message de flux de paquets, etc. il est à noter que la valeur d'une fonction de hachage de chaque message de flux de paquets est calculée et sert de simple identifiant de ce message.

L'invention a donc pour but de répondre à ce besoin en proposant un procédé permettant le rapprochement automatique des données contenues dans ces deux types de sources de données.

Pour cela, l'invention a pour objet un procédé, un support d'enregistrement d'informations et un système conformes aux revendications. L'invention est définie dans les revendications indépendantes. D'autres caractéristiques et avantages de l'invention ressortiront plus clairement de la description détaillée qui va suivre d'un mode de réalisation particulier, donné à titre indicatif et nullement limitatif, et faite en se référant aux dessins annexés sur lesquels :

- la figure 1 est une représentation schématique d'une installation de surveillance d'un réseau de communication ;

- la figure 2 est une représentation schématique d'une table de hachage ; et,
- la figure 3 est une représentation, sous forme de blocs, d'un mode de réalisation particulier d'un procédé d'association des sources de données de l'installation de la figure 1.

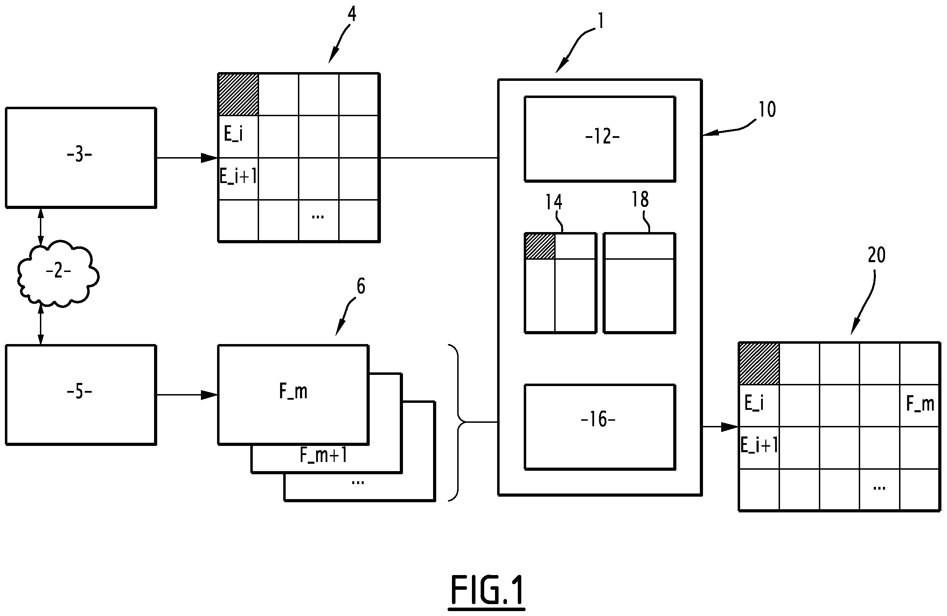

En se référant à la figure 1, une installation 1 de surveillance d'un réseau de communication IP 2 comporte un composant de surveillance 3, propre à générer une première source de données, sous la forme d'un tableau d'alertes 4, stocké dans une base de données adaptée.

L'installation 1 comporte également une sonde 5 d'analyse du contenu de paquets, propres à générer une seconde source de données 6, constituée par une pluralité de fichiers binaires F_m.

L'installation 1 comporte un moteur d'association des première et seconde sources de données 4 et 6. Ce moteur est référencé sur la figure 1 par le chiffre 10.

Le moteur 10 comporte un premier module 12 de génération d'une table de hachage 14 à partir des informations contenues dans le tableau d'alertes 4.

Le moteur 10 comporte également un second module 16 d'analyse du contenu d'un fichier binaire F_m et de réconciliation avec le tableau 4.

Le moteur 10 est propre à générer un tableau d'alertes enrichi 20.

Le composant 3 est un système de détection d'intrusion propre à repérer des évènements anormaux sur le réseau 2 surveillé. Il s'agit par exemple du logiciel libre SNORT.

Le composant 3 est propre à capturer, de préférence en temps réel, un flux de paquets de données sur le réseau 2.

Le composant 3 comporte une bibliothèque de règles d'alerte, qui ont été paramétrées par un opérateur ou prédéfinies par un éditeur. Chaque règle d'alerte est définie par un ensemble de critères constituant une signature d'une attaque possible sur le réseau 2.

Le composant 3 est propre à filtrer les paquets capturés afin de vérifier s'ils répondent, oui ou non, à l'ensemble des critères d'une des règles de la bibliothèque.

Si un évènement répond à l'ensemble des critères d'une règle d'alerte, le composant 3 stocke, dans le tableau 4, cet évènement et les paramètres qui le caractérisent.

Le format IDMEF, selon l'acronyme anglais « Intrusion Détection Message Exchange Format » permet de formaliser le contenu des tableaux, tel que le tableau 4, générés en sortie d'un composant logiciel de surveillance. Ce format est par exemple décrit dans le document RFC4765, disponible en ligne à l'adresse « http://tools.ietf.org/rfc/rfc4765.txt. »

Ainsi, le format du tableau 4 est le suivant :

- un champ d'identification d'un évènement suspect E_i ;
- la date à laquelle le paquet correspondant à cet évènement a été capturé sur le réseau ;
- l'adresse IP et le port de l'émetteur du paquet capturé, indiqués dans la partie d'en-tête du paquet capturé ;
- l'adresse IP et le port du destinataire du paquet capturé, indiqués dans la partie d'en-tête du paquet capturé ;
- la référence de la règle d'alerte que vérifie l'événement, cette référence permettant de remonter à la règle d'alerte dans la bibliothèque définie par l'opérateur ; et,
- un entier indiquant la sévérité de l'alerte.

La sonde 5 effectue une inspection en profondeur des paquets interceptés sur le réseau 2.

La sonde 5 permet la duplication de tous les paquets qui circulent sur le réseau 2 au niveau du point d'implantation de la sonde 5 dans le réseau 2 et qui correspondent à une règle d'interception. La règle d'interception est définie par l'opérateur.

Pour chaque paquet intercepté, la sonde 5 lit non seulement le contenu de la partie d'en-tête de ce paquet, mais également le contenu de la partie de charge utile de ce paquet, c'est-à-dire le message transmis entre l'émetteur et le destinataire du paquet.

La sonde 5 est également propre à reconstruire une session de communication entre un émetteur et un destinataire en associant les paquets partageant des mêmes deux couples adresse IP et port de machine, et un même protocole de communication. Un nouveau paquet est ajouté à une session lorsque le temps écoulé entre la date à laquelle ce nouveau paquet a été intercepté sur le réseau et la date à laquelle le dernier paquet de la session a été intercepté sur le réseau, est inférieur à une durée prédéterminée. A défaut, une nouvelle session est créée.

La sonde 5 stocke l'ensemble des données résultant de cette lecture et de cette reconstruction dans la seconde source de données 6. La sonde 5 est propre à générer, par session, un fichier binaire F_m comportant à la fois des données relatives à la partie d'en-tête des paquets (adresse IP et port d'une première machine, adresse IP et port d'une seconde machine, ainsi que le protocole de communication utilisé ces première et seconde machines) et à la partie de charge utile des paquets interceptés (paramètres des requêtes échangées entre les première et secondes machines, valeurs des paramètres dans les réponses échangées, etc.)

Le format d'un fichier F_m est par exemple du type « .pcap », généré par exemple par le logiciel Winpcap de la société Riverbed Technology.

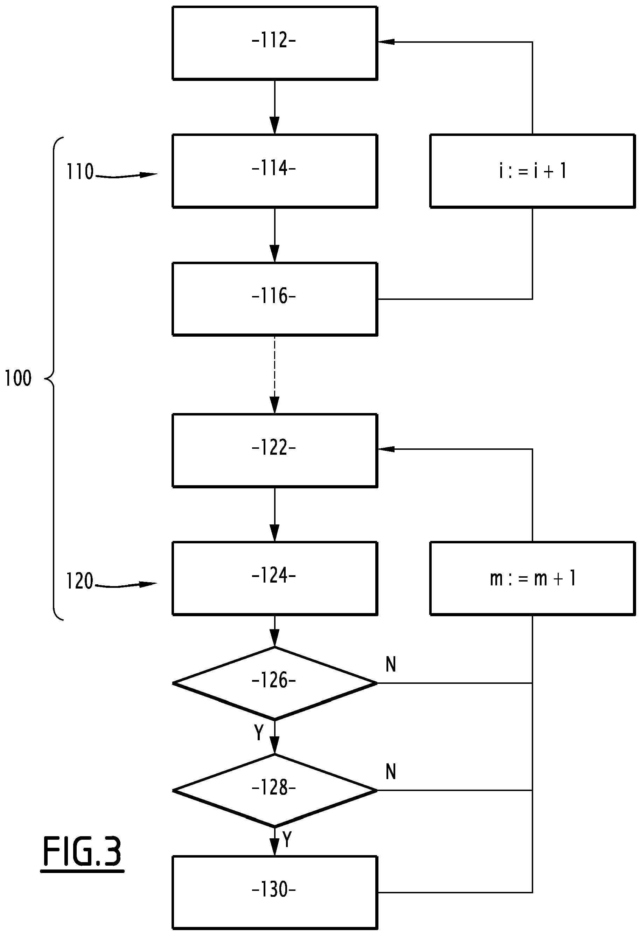

Le moteur 10 est propre à mettre en oeuvre le procédé d'association représenté schématiquement sur la figure 3.

Le procédé d'association 100 se décompose en deux parties, consistant d'abord à élaborer une table de hachage 14 à partir du tableau 4, puis, une fois la table de hachage obtenue, à analyser successivement chacun des fichiers F_m disponibles afin d'essayer de l'appareiller avec l'un des évènements du tableau 4. Le procédé conduit à la génération d'un tableau enrichi 20.

De manière générale, la mise en oeuvre du procédé 100 prévoit la définition d'une classe Alerte. La classe Alerte est définie par une pluralité de variables qui sont :

- l'adresse IP de l'émetteur (IPE), codée sur quatre octets ;
- l'adresse IP du destinataire (IPD), codée sur quatre octets ;
- le port utilisé par l'émetteur (PE), codé sur deux octets ;
- le port utilisé par le destinataire (PD), codé sur deux octets ; et,
- le protocole de communication utilisé (P), codé sur un octet.

Un objet Alerte A_i correspond à une instance de la classe Alerte, c'est-à-dire à un jeu de valeurs pour les cinq variables précitées. Un objet Alerte A_i est donc codé sur treize octets.

La classe Alerte est également définie par une fonction de hachage H. La fonction de hachage utilisée dans le présent mode de réalisation est de la forme :

$$H = \sum_{q=0}^{N-1} S_q . 37^{N-1-q}$$

où : N est le nombre d'octets utilisé pour représenter un objet (N vaut treize dans le présent mode de réalisation) ; et $S_q$ est un poids permettant de conférer à certains octets une plus grande importance dans la valeur de hachage obtenue de manière à réduire les collisions (c'est-à-dire de manière à éviter au maximum que deux objets différents ait la même valeur de hachage). Par exemple, les deux derniers octets de chaque adresse IP sont affectés d'un poids plus important que les deux premiers octets de chaque adresse IP.

Enfin, la classe Alerte est définie par une fonction d'égalité. L'opération d'égalité est redéfinie pour permettre la comparaison de premier et second objets entre eux, de manière à vérifier s'ils sont égaux. Le processus d'exécution de la fonction égalité consiste à vérifier, successivement pour chacune des variables du premier objet, si sa valeur est égale à celle de la variable correspondante du second objet. Dès qu'une vérification est négative, le processus est stoppé et les premier et second objets sont dits différents.

Avantageusement, pour accélérer le processus d'exécution de la fonction d'égalité, qui n'est utilisée que si deux objets ont la même valeur de hachage, il convient d'ordonner les variables de sorte que le processus d'exécution de la fonction de hachage débute par la vérification des variables dont les octets ont un poids peu important dans la fonction de hachage (c'est-à-dire les octets qui ne sont pas ou peu pris en compte dans la fonction de hachage).

Le procédé 100 comporte une première partie 110 correspondant à l'exécution du module 12 de génération de la table de hachage 14.

Pour chaque évènement E_i du tableau 4, un objet Alerte A_i est d'abord instancié dans une étape 112.

Puis, dans une étape 114, la fonction de hachage H est utilisée afin de calculer la valeur de hachage de l'objet Alerte A_i instancié.

Enfin, dans une étape 116, la table de hachage 14 est mise à jour.

Lorsque la valeur de hachage Val_p calculée pour l'objet Alerte A_i n'existe pas encore dans la table 14, un nouvel index est créé dans la table 14, en associant à la valeur calculée Val_p, un pointeur Add_p pointant vers une adresse dans un espace mémoire 18 dédié. Est alors enregistré à cette adresse, un doublet HMap_i dont un premier champ correspond à l'objet Alerte A_i et dont un second champ est réservé pour éventuellement recevoir ultérieurement un identifiant d'un fichier F_m.

Lorsque la valeur de hachage calculée Val_q pour l'objet Alerte A_k instancié existe déjà dans l'index de la table 14, c'est-à-dire qu'au moins un autre objet A_j a pour valeur de hachage la valeur Val_q, la mise à jour de la table 14 consiste à ajouter, à l'adresse indiquée par le pointeur Add_q associé à la valeur Val_q dans la table 14, un doublet HMap_k à la suite du doublet HMap_j contenant l'objet A_j. Le doublet HMap_k comporte l'objet A_k.

Les étapes 112, 114 et 116 sont itérées pour tous les évènements E_i du tableau 14. Une fois que l'ensemble du tableau 4 a été parcouru, l'espace mémoire 18 du moteur 10 comporte un objet Alerte A_i (c'est-à-dire une instanciation de la classe Alerte) pour chacun des évènements E_i du tableau 14.

Puis, de manière asynchrone, la seconde partie 120 du procédé 100 est réalisée. Celle-ci correspond à l'exécution du module 16 du moteur 10.

Dans une étape 122, le contenu d'un fichier binaire F_m est analysé afin d'extraire des valeurs possibles pour une adresse IP un émetteur, un port émetteur, une adresse IP d'un destinataire, un port d'un destinataire et d'un protocole. Cette étape correspond à la mise en oeuvre d'un algorithme optimisé et parallélisé de parcours (« parsing » en anglais) du fichier F_m.

Puis, à l'étape 124, la fonction de hachage H de la classe Alerte est appliquée aux valeurs extraites à l'étape 122. Cela conduit à l'obtention d'une valeur de hachage Val_m.

L'étape 126 consiste alors à vérifier si la valeur Val_m correspond à un index de la table de hachage 14.

Dans la négative, le procédé 100 est interrompu et reprend à l'étape 122 pour analyser le fichier suivant F_m+1 de la seconde source de données 6.

En revanche, dans l'affirmative (c'est-à-dire si il existe dans la table 14 une valeur Val_n égale à Val_m) l'étape 128 consiste à vérifier si il y égalité entre les valeurs extraites à l'étape 122 et l'objet ou l'un des objets stocké(s) dans l'espace mémoire 18 à l'adresse Add_n associée à l'index Val_n de la taxe 14.

Pour ce faire, la fonction d'égalité de la classe Alerte est appliquée entre les valeurs extraites à l'étape 122 et le premier champ du premier doublet contenu à l'adresse Add_n.

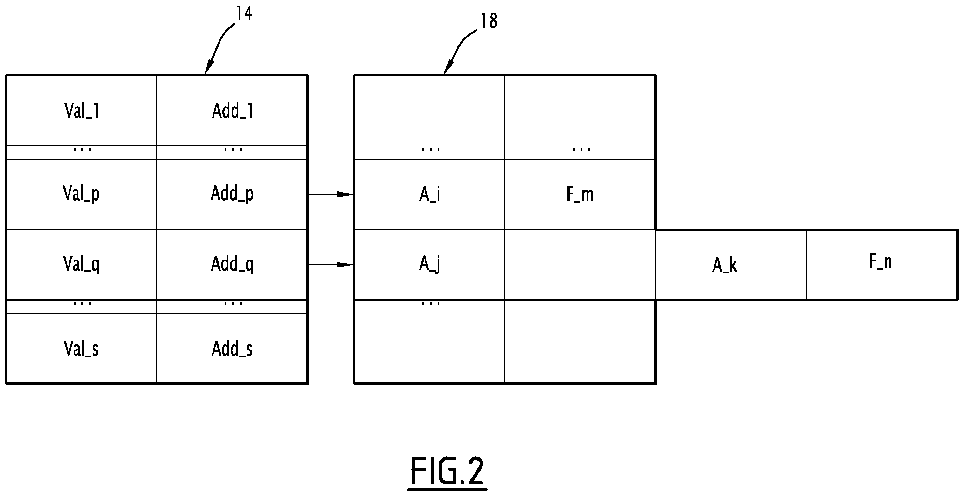

En cas d'égalité (cas de n=p sur la figure 2), à l'étape 130, un identifiant du fichier F_m est écrit dans le second champ du doublet HMap_i. L'identifiant du fichier F_m est par exemple le chemin d'accès à ce fichier. Le procédé 100 est alors interrompu et reprend à l'étape 122 pour analyser le fichier suivant F_m+1.

Si il n'y pas d'égalité, la fonction d'égalité de la classe Alerte est appliquée entre les valeurs extraites à l'étape 122 et le premier champ du second doublet contenu à l'adresse Add_n. L'étape 128 est itérée jusqu'à ce que l'ensemble des doublets à l'adresse Add_n a été parcouru sans succès. Le procédé 100 est interrompu et reprend alors à l'étape 122 pour analyser le fichier suivant F_m+1 de la pluralité de fichiers 6.

Une fois que les différents fichiers F_m de la seconde source de données 6 ont été traités, un tableau enrichi 20 est obtenu à partir du contenu de l'espace mémoire 18. Le tableau enrichie 20 associe, lorsqu'il existe, le ou chaque identifiant d'un fichier F_m, aux paramètres de l'évènement E_i mentionnés dans le tableau 4.

Ce tableau enrichi 20 constitue une jointure entre les premier et second sources de données 4 et 6. L'opérateur peut ainsi mieux étudier un évènement considéré comme une alerte de sécurité par le composant de sécurité 3, en consultant les données d'application collectées par la sonde 5 vers lesquelles renvoie le tableau enrichi.

## Revendications

**1.** Procédé d'association (100) d'une première source de données avec une seconde source de données, la première source de données (4) étant constituée d'un tableau généré par un composant de surveillance (3) d'un réseau de communication (2), chaque ligne du tableau correspondant à un évènement (E_i) sur ledit réseau satisfaisant à une règle d'alerte prédéfinie, la seconde source de données (6) étant constituée par une pluralité de fichiers binaires (F_m), chaque fichier étant généré par une sonde (3) d'analyse du contenu de paquets interceptés sur ledit réseau, un fichier rassemblant les données des paquets appartenant à une même session de communication sur ledit réseau, le procédé comportant les étapes consistant à :

- fournir une classe dite classe Alerte, définie par une pluralité de variables, une fonction de hachage et une fonction d'égalité ;
- pour chaque évènement (E_i) de la première source de données (4), instancier un objet Alerte (A_i) de la classe Alerte et mettre à jour une table de hachage (14) en calculant la valeur de la fonction de hachage pour ledit objet Alerte instancié ;
- pour chaque fichier (F_m) de la seconde source de données (6), analyser le fichier pour extraire des valeurs possibles pour les variables de la classe Alerte ;
- en utilisant la fonction de hachage et la fonction d'égalité de la classe Alerte, vérifier, au moyen de la table de hachage (14), si les valeurs extraites correspondent à un objet Alerte instancié ; et,
- dans l'affirmative, associer en mémoire un identifiant du fichier audit objet Alerte instancié correspondant, selon lequel la fonction de hachage de la classe Alerte est définie par :

$$H = \sum_{q=0}^{N-1} S_q . 37^{N-1-q}$$

où N est le nombre d'octets utilisés pour représenter un objet de la classe Alerte et $S_q$ est un poids permettant de pondérer le qième octet.

**2.** Procédé selon la revendication 1, dans lequel le réseau (2) est un réseau de communication IP.

**3.** Procédé selon l'une quelconque des revendications précédentes, dans lequel le tableau de la première source de données (4) respecte le format IDMEF.

**4.** Procédé selon l'une quelconque des revendications précédentes, dans lequel chaque fichier binaire (F_m) de la seconde source de données (6) respecte le format «.pcap ».

**5.** Procédé selon l'une quelconque des revendications précédentes, dans lequel les variables de la classe Alerte sont :

- l'adresse IP d'un émetteur d'un paquet correspondant à l'événement (E_i) considéré ;
- l'adresse IP d'un destinataire dudit paquet ;
- le port utilisé par ledit émetteur ;
- le port utilisé par ledit destinataire ; et,
- le protocole de communication utilisé entre ledit émetteur et ledit destinataire.

**6.** Procédé selon l'une quelconque des revendications

1 à 5, dans lequel le processus d'exécution de la fonction d'égalité prévoit que les variables des objets Alerte à comparer soient ordonnées, l'ordonnancement des variables dépendant des poids utilisés dans la fonction de hachage.

**7.** Support d'enregistrement d'informations, **caractérisé en ce qu'**il comporte des instructions pour l'exécution d'un procédé conforme au procédé selon l'une quelconque des revendications 1 à 6, lorsque ces instructions sont exécutées par un calculateur électronique.

**8.** Système comportant une unité de commande, **caractérisé en ce que** ladite unité de commande est programmée pour exécuter un procédé conforme au procédé selon l'une quelconque des revendications 1 à 6.

**Patentansprüche**

**1.** Verfahren zur Verknüpfung (100) einer ersten Datenquelle mit einer zweiten Datenquelle, wobei die erste Datenquelle (4) aus einer Tabelle besteht, die durch eine Überwachungskomponente (3) eines Kommunikationsnetzwerkes (2) erzeugt wird, wobei jede Zeile der Tabelle einem Ereignis (E_i) auf dem besagten Netzwerk entspricht, das eine vorgegebene Alarmregel erfüllt,
die zweite Datenquelle (6) durch eine Vielzahl an binären Dateien (F_m) gebildet wird, wobei jede Datei durch eine Sonde (3) zur Analyse des Inhalts von auf dem besagten Netzwerk abgefangenen Paketen erzeugt wird, wobei eine Datei die Daten der Pakete, die zu ein- und derselben Kommunikationssitzung auf dem besagten Netzwerk gehören, sammelt, wobei das Verfahren die Schritte umfasst, die bestehen in:

- Bereitstellen einer Klasse, einer so genannten Alarmklasse, definiert durch eine Vielzahl von Variablen, eine Hashfunktion und eine Gleichheitsfunktion;
- für jedes Ereignis (E_i) der ersten Datenquelle (4) eins Alarmobjekt (A_i) der Alarmklasse instanzieren und eine Hashtabelle (14) aktualisieren, wobei der Wert der Hashfunktion für das besagte instanzierte Alarmobjekt berechnet wird;
- für jede Datei (F_m) der zweiten Datenquelle (6) die Datei analysieren, um für die Variablen der Alarmklasse mögliche Werte zu extrahieren;
- unter Verwendung der Hashfunktion und der Gleichheitsfunktion der Alarmklasse überprüfen, anhand der Hashtabelle (14), ob die extrahierten Werte einem instanzierten Alarmobjekt entsprechen; und
- falls ja, im Speicher eine Kennung der Datei mit dem entsprechenden instanzierten Alarmobjekt verknüpfen,

laut welchem die Hashfunktion der Alarmklasse definiert ist durch:

$$H = \Sigma_{q=0}^{N-1} S_q . 37^{N-1-q}$$

wo N die Anzahl von Bytes ist, die verwendet werden, um ein Objekt der Alarmklasse darzustellen, und $S_q$ ein Gewicht ist, das es ermöglicht, das q-te Byte zu gewichten.

**2.** Verfahren nach Anspruch 1, in welchem das Netzwerk (2) ein IP-Kommunikationsnetzwerk ist.

**3.** Verfahren nach einem der vorstehenden Ansprüche, in welchem die Tabelle der ersten Datenquelle (4) das Format IDMEF einhält.

**4.** Verfahren nach einem der vorstehenden Ansprüche, in welchem jede binäre Datei (F_m) der zweiten Datenquelle (6) das Format ".pcap" einhält.

**5.** Verfahren nach einem der vorstehenden Ansprüche, in welchem die Variablen der Alarmklasse sind:

- die IP-Adresse eines Senders eines Pakets, das dem betrachteten Ereignis (E_i) entspricht;
- die IP-Adresse eines Empfängers des besagten Pakets;
- der von dem besagten Sender verwendete Port;
- der von dem besagten Empfänger verwendete Port; und
- das zwischen dem besagten Sender und dem besagten Empfänger verwendete Kommunikationsprotokoll.

**6.** Verfahren nach einem der Ansprüche 1 bis 5, in welchem der Ausführungsprozess der Gleichheitsfunktion vorsieht, dass die Variablen der zu vergleichenden Alarmobjekte geordnet sind, wobei die Ordnung der Variablen von den in der Hashfunktion verwendeten Gewichten abhängt.

**7.** Aufzeichnungsträger von Informationen, **dadurch gekennzeichnet, dass** er Anweisungen für die Ausführung eines Verfahrens gemäß dem Verfahren nach einem der Ansprüche 1 bis 6 umfasst, wenn diese Anweisungen durch einen elektronischen Rechner ausgeführt werden.

**8.** System, bestehend aus einer Steuerungseinheit, **dadurch gekennzeichnet, dass** die besagte Steu-

erungseinheit programmiert ist, um ein Verfahren gemäß dem Verfahren nach einem der Ansprüche 1 bis 6 auszuführen.

**Claims**

1. A method (100) for associating a first source of data with a second source of data,
   the first source of data (4) consisting of a table generated by a component (3) for monitoring a communication network (2), each line of the table corresponding to an event (E_i) on said network satisfying a predefined alert rule,
   the second source of data (6) being formed by a plurality of binary files (F_m), each file being generated by a probe (3) for analyzing the contents of intercepted packets on said network, a file gathering the data of the packets belonging to a same communication session on said network,
   the method includes the steps of:

   - providing a class, called Alert class, defined by a plurality of variables, a hashing function and an equality function;
   - for each event (E_i) of the first source of data (4), instantiating an Alert object (A_i) of the Alert class and updating a hashing table (14) by calculating the value of the hashing function for said instantiated Alert object;
   - for each file (F_m) of the second source of data (6), analyzing the file so as to extract possible values for the variables of the Alert class;
   - by using the hashing function and the equality function of the Alert class, checking by means of the hashing table (14), whether the extracted values correspond to an instantiated Alert object; and,
   - if this is the case, associating in memory an identifier of the file of said corresponding instantiated Alert object,

   according to which method the hashing function of the Alert class is defined by:

   $$H = \sum\nolimits_{q=0}^{N-1} S_q .37^{N-1-q}$$

   wherein N is the number of bytes used for representing an object of the Alert class and $S_q$ is a weight with which the qth byte may be weighted.

2. The method according to claim 1, wherein the network (2) is an IP communication network.

3. The method according to any of the preceding claims, wherein the table of the first source of data (4) observes the IDMEF format.

4. The method according to any of the preceding claims, wherein each binary file (F_m) of the second source of data (6) observes the «.pcap » format.

5. The method according to any of the preceding claims, wherein the variables of the Alert class are:

   - the IP address of a transmitter of a packet corresponding to the relevant event (E_i);
   - the IP address of an addressee of said packet;
   - the port used by said transmitter;
   - the port used by said addressee; and,
   - the communications protocol used between said transmitter and said addressee.

6. The method according to any of the claims 1 to 5, wherein the process for executing the equality function provides that the variables of the Alert objects to be compared are ordered, the ordering of the variables depending on the weights used in the hashing function.

7. A medium for recording data, **characterized in that** it includes instructions for executing a process compliant with the method according to any of claims 1 to 6, when these instructions are executed by an electronic computer.

8. A system including a control unit, **characterized in that** said control unit is programmed for executing a process compliant with the method according to any of claims 1 to 6.

EP 2 830 281 B1

FIG.2

EP 2 830 281 B1

FIG.3

**EP 2 830 281 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 735658581 B